**Europäisches Patentamt**

**European Patent Office**

**Office européen des brevets**

(19)

(11) Veröffentlichungsnummer : **0 056 658**
**B1**

(12)

# EUROPÄISCHE PATENTSCHRIFT

(45) Veröffentlichungstag der Patentschrift :
05.04.89

(21) Anmeldenummer : **82100414.0**

(22) Anmeldetag : **21.01.82**

(51) Int. Cl.⁴ : **A 23 C   9/142**, B 01 D 13/00//
A23C19/028, C12C9/00

(54) Verfahren zur Vereinheitlichung der Struktur der Eiweißstoffe von Milch.

(30) Priorität : 21.01.81 DE 3101814

(43) Veröffentlichungstag der Anmeldung :
28.07.82 Patentblatt 82/30

(45) Bekanntmachung des Hinweises auf die Patenterteilung : 05.04.89 Patentblatt 89/14

(84) Benannte Vertragsstaaten :
AT BE CH DE FR GB IT LI LU NL SE

(56) Entgegenhaltungen :
DE--A-- 2 354 475
FR--A-- 2 175 877
FR--A-- 2 252 057
FR--A-- 2 263 701
FR--A-- 2 442 594
US--A-- 4 125 527
Die Akte enthält technische Angaben, die nach dem Eingang der Anmeldung eingereicht wurden und die nicht in dieser Patentschrift enthalten sind.

(73) Patentinhaber : **Milchwirtschaftliche Förderungsgesellschaft mbH Niedersachsen**
**Seelhorststrasse 4**
**D-3000 Hannover 1 (DE)**

(72) Erfinder : **Roiner, Franz, Prof. Dipl.-Kfm.**
**Inselweg 7**
**D-3013 Barsinghausen 9 (DE)**

(74) Vertreter : **Lorenz, Eduard et al**
**Rechtsanwälte Lorenz, Eduard - Seidler, Bernhard Seidler, Margrit - Gossel, Hans-K. Philipps, Ina, Dr.**
**Widenmayerstrasse 23**
**D-8000 München 22 (DE)**

EP 0 056 658 B1

Jouve, 18, rue St-Denis, 75001 Paris, France

**Beschreibung**

Die Erfindung betrifft ein Verfahren zur Vereinheitlichung der Struktur der Eiweißstoffe von Milch.

Ein derartiges Verfahren ist aus der US-A-4 125 527 bekannt. Bei dem vorbekannten Verfahren wird Molke durch Ultrafiltration vorkonzentriert, erneut verdünnt und dann nochmals durch Ultrafiltration behandelt. Hierbei soll jedoch keine Beeinflussung der Proteine auf physikalische Weise stattfinden.

Milch ist ein polydisperses wässriges System mit wasserlöslichen Inhaltsstoffen.

Derartige Systeme sind in ihrem originären Zustand gekennzeichnet durch Gleichgewichtslagen. Die Strukturen der einzelnen Inhaltstoffe sind in ihrem Wasserlösungsverhalten ausgependelt, sie haben sich aufeinander eingestellt. Jeder Inhaltstoff hat mikrostrukturell gesehen die Form angenommen, die dem vorhandenen Wasservorrat entspricht. Aus diesem Grunde kann man sagen, das Gesamtsystem befindet sich im Gleichgewicht. (Alle Einzelsysteme befinden sich ebenfalls im wasserabhängigen Gleichgewicht.)

Am Beispiel Milch (einem der kompliziertesten polydispersen wäßrigen Systeme) läßt sich dieser Zustand gut beschreiben. Milch besteht aus Kohlehydraten, Fett, Eiweiß, Salzen, Spurenelementen, Vitaminen, Enzymen und bestimmten Werkstoffen. Milch enthält somit fast alle Nährstoffe.

Milch ist deshalb ein Grundnahrungsmittel.

Die erwähnten Nährstoffe besitzen eine Fülle von Eigenschaften. Einige dieser Eigenschaften sind :

— wasserbindende, wasserabstoßende Eigenschaften,
— schaumbildende, gelbildende, verdickende Eigenschaften,
— thixotrope, agglomerierende, vernetzende Eigenschaften,
— werkstoffbindende, werkstoffbildende, werkstofffreisetzende Eigenschaften,
— puffernde, süßungsverstärkende, süßungsvermindernde, karamelisierende Eigenschaften,
— geruchbindende, geschmacksbeeinflussende, flavouraktivierende Eigenschaften,
— säuerungsfördernde, säuerungsbindende Eigenschaften,
— energiefreisetzende, energiebindende Eigenschaften,

usw.

In originärer Milch ist die wasserbindende Eigenschaft der Milchinhaltstoffe dominant, alle anderen Eigenschaften sind dieser einen Eigenschaft untergeordnet.

Alle anderen Eigenschaften sind demnach im wäßrigen Zustand nicht verfügbar.

Es kommt hinzu, daß originäre polydisperse wäßrige Systeme in zunehmendem Maße durch Fütterungseinflüsse, durch Umweltbelastung und durch unsachgemäße Behandlung die wasserabhängigen Gleichgewichtslagen ihrer Inhaltstoffe für eine anschließende Produkterstellung, noch ungünstiger gestalten als dies im originären Zustand der Fall ist.

So sind beispielsweise Hemmstoffbelastungen, Wasserüberangebot, enzymaktivierende Maßnahmen in vermehrtem Maße feststellbar.

Bisher wurden Systeme der zuletzt beschriebenen Art entweder aus einem Produktionsprozeß ausgeschieden oder wenn sie nicht rechtzeitig erkannt wurden mit im Produktionsprozeß verwendet und führten dann zu erheblichen Produktionsverlusten.

Systeme der zuerst beschriebenen Art wurden ohne Rücksicht auf den Zustand der einzelnen Inhaltstoffe global behandelt, wobei das Aktivieren einer bestimmten notwendigen Eigenschaft eines Inhaltstoffes großer Umwege bedurfte.

Am Beispiel der Käseherstellung soll dies verdeutlicht werden.

Die Käseherstellung ist besonders auf gelbildende, vernetzende und enzymbildende Eigenschaften des Inhaltstoffes Eiweiß angewiesen.

Bis vor kurzem wurde das Gesamtsystem Milch (d. h. auch alle Einzelsysteme der verschiedenen Inhaltstoffe) so behandelt, daß obige Eigenschaften letztlich mehr oder minder gut zum Tragen kamen.

Milchzucker und bestimmte Milchsalze sowie die sogenannten Molkenproteine mußten alle mitbehandelt werden, obwohl sie in ihrem vorgegebenen wasserlöslichen Zustand die zu erarbeitende gelbildende Eigenschaft des Caseins stark stören.

In einem sehr späten Stadium des Produktsionsganges werden sie dann als Abfallprodukte mehr oder minder gut entfernt.

Neuere Techniken gehen davon aus, die Systeme durch bestimmte Trennverfahren wie Ultrafiltration oder Ultrafiltration in Verbindung mit anderen Trennverfahren (wie z. B. Vakuumverdampfung) vorweg zu behandeln, so daß Inhaltstoffe, die für die Herausarbeitung einer bestimmten Eigenschaft eines anderen Inhaltstoffes störend wirken, vorher vermindert werden.

So sind Verfahren der Ultrafiltration zur Herstellung eines Eiweißkonzentrates mit unterschiedlichen Eiweißgehältern oder Ultrafiltrationsverfahren, die vor oder nach der eigentlichen Ultrafiltration den Systemen Wasser entziehen, bekannt, mit dem Ziel ein bestimmtes Eiweißkonzentrat zu erhalten ohne Rücksicht zu nehmen auf das Verhalten der Einzelsysteme während der Trennvorgänge deren gegenseitige Beeinflussung und deren Eigenschaftszustand im Konzentrat.

Diese Verfahren behandeln das Gesamtsystem völlig willkürlich ohne Rücksicht darauf, wie sich die Einzelsysteme während des Verfahrensablaufs gegenseitig beeinflussen, lediglich mit dem Ziel, ein bestimmtes Konzentrat mit bestimmten Anteilen von Einzelinhaltstoffen zu erhalten. Gleichgültig ob Einzelsysteme noch wasserlösliche Zustände eingehen können oder nicht, und ohne Rücksicht darauf, welches Verhalten die nunmehr sich zufällig ergebenden Zustände der Einzelsysteme zeigen.

Wie aus den deutschen Offenlegungsschriften 22 11 737 und 27 46 536 hervorgeht, wird dabei ausschließlich vom erzielbaren Eiweißgehalt bzw. gewünschtem Endwassergehalt gesprochen.

Die Anwendung dieser Verfahren zeigt, daß solche Konzentrate, bei denen eine völlig willkürliche und rein zufällige Eigenschaftsveränderung der Inhaltstoffe sich einstellt, praktisch unbrauchbar sind, da sie zum Beispiel das Entstehen von Bitterstoffen in hohem Maße zulassen und außerdem eine kontrollierte Vernetzung von Eiweiß wegen der willkürlichen Größenverteilung von Eiweißpartikelchen überhaupt nicht ermöglichen.

Der Erfindung liegt die Aufgabe zugrunde, ein Verfahren bereitzustellen, mit dem es möglich ist, die Inhaltstoffe von Milch in ihrem wasserlöslichen Zustand mikrostrukturmäßig aufeinander abzustimmen. Erfindungsgemäß wird diese Aufgabe dadurch gelöst, daß die natürlichen Inhaltstoffe und/oder Zusatzstoffe im Ausgangsrohstoff mit Hilfe von Trennverfahren in ihren Mikrostrukturen verändert und so zueinander gestellt werden, daß dadurch Eigenschaften des herzustellenden Endprodukts bereits im Ausgangsrohstoff im wasserlöslichen Zustand festgelegt werden.

Vorteilhaft werden beim erfindungsgemäßen Verfahren die Inhaltstoffe und/oder Zusatzstoffe mengenmäßig, größenmäßig, wasserlösungsmäßig und/oder gleichgewichtsmäßig zueinander gestellt. Bei flüssigen Produkten und bei Produkten, die den Gesamtanteil der ursprünglichen Trockenmasse enthalten, kann die abgetrennte, behandelte oder unbehandelte Flüssigkeit ganz oder teilweise wieder zugesetzt werden. Es kann mehr Flüssigkeit als die abgetrennte Flüssigkeitsmenge wieder zugesetzt werden. Die Verfahrensabläufe können durch Anwendung unterschiedlicher Temperaturen bei den einzelnen Trennvorgängen erfolgen bzw. kann der Wiederzusatz von Flüssigkeit bei unterschiedlichen Temperaturen erfolgen. Die Anteilsveränderung der Inhaltsstoffe und/oder Zusatzstoffe kann durch Hintereinander-, Nebeneinander- oder Parallelschaltung der Trennverfahren erfolgen. Nach einer bevorzugten Ausführungsform wird beim erfindungsgemäßen Verfahren ein Vorkonzentrat hergestellt, dieses Vorkonzentrat daraufhin mit unbehandelten oder behandelten polydispersen Systemen oder unbehandeltem oder behandeltem Ausgangsstoff verschnitten, die Mischung erneut einem Trennverfahren unterzogen und gegebenenfalls nach Erreichung eines Konzentrationsgrades der jeweils konzentrierbaren Anteile, der über dem Konzentrationsgrad der Mischung liegt oder mindestens den anderthalbfachen Konzentrationsgrad aufweist, während des Trennverfahrens weitere Maßnahmen zur Beeinflussung von Mikrostrukturen erfolgen. Nach diesem Verfahren können beispielsweise Milchprodukte hergestellt werden. Zur Herstellung von Milchprodukten mit Hilfe der Ultrafiltration wird beispielsweise ein Vorkonzentrat hergestellt (das beispielsweise einen etwa verdoppelten Gehalt an konzentrierbaren Anteilen, wie Eiweiß, aufweist). Dieses Vorkonzentrat wird daraufhin mit unbehandelter oder behandelter Milch verschnitten, und die Mischung wird erneut ultrafiltriert. Gegebenenfalls können nach Erreichen eines Konzentrationsgrades der jeweils konzentrierbaren Anteile (z. B. Eiweiß) von mindestens dem Anderthalbfachen während des Ultrafiltrationsverfahrens weitere Maßnahmen zur Beeinflussung von Mikrostrukturen erfolgen.

Die vorliegende Erfindung befaßt sich somit mit der gezielten Beeinflussung von Einzelsystemen in einem Gesamtsystem. Im Rahmen der Erfindung hat es sich nämlich gezeigt, daß es günstig ist, bei der Herstellung von Produkten aus derartigen Systemen ganz bestimmte Eigenschaften einzelner Inhaltsstoffe bereits im wasserlöslichen Zustand verfügbar zu machen, um diese Eigenschaften einzelner Inhaltsstoffe gezielt einsetzen zu können, weil dann Herstellungsprozesse wesentlich energiesparender, wirtschaftlicher und umweltfreundlicher durchgeführt werden können.

Erfindungsgemäß werden durch an sich bekannte Trennverfahren die Veränderungen der Mikrostrukturen der Einzelsysteme während des Produktionsablaufs so gesteuert, daß produktbezogene Eigenschaften, die zunächst verdeckt vorliegen, bereits im wasserlöslichen Zustand verfügbar gemacht werden.

Wird Magermilch beispielsweise nach dem Stande der Technik einem Ultrafiltrationsverfahren unterworfen, dann wird das vorhandene Eiweiß, das im wasserlöslichen Zustand vorliegt, konzentriert. Gleichzeitig werden Milchzucker und Milchsalze, die ebenfalls wasserlöslich vorliegen, ohne Rücksicht auf den mikrostrukturellen Zustand des Eiweißes entfernt. So verändern sich die Anteile bei einer Konzentration des Eiweißes von 1 : 5 folgendermaßen :

(Siehe Tabelle Seite 4 f.)

| Verhältnis der Anteile in der Ausgangsmilch | Verhältnis der Anteile im Konzentrat |
|---|---|
| auf 5 Teile Casein kommt 1 Teil Protein – | – auf 5 T Casein kommt 1 Teil Protein – |
| auf 0,6 Teile Casein kommt 1 Teil Lactose – | – auf 2,5 Teile Casein kommt 1 Teil Lactose – |
| auf 0,8 Teile Casein kommt 1 Teil Asche – | – auf 8 Teile Casein kommt 1 Teil Asche – |
| auf 23 Teile Casein kommt 1 Teil Calcium – | – auf 30,3 Teile Casein kommt 1 Teil Calcium – |

Diese Anteilveränderung führt dazu, daß Eiweißmicellen in Submicellen zerfallen und die Stabilität dieses Eiweißes so nachhaltig verändert wird, daß nachfolgende Verfahrensschritte großen Schaden anrichten und nicht optimierbar sind.

Diese negative Veränderung in der Mikrostruktur der Milchinhaltsstoffe tritt bei allen bisher angewendeten Trennverfahren ein, da sie entweder alle oder aber nur einzelne Milchinhaltsstoffe anteilsmäßig relevant verändern ohne Rücksicht auf deren Gleichgewichtszustände und deren Auswirkungen auf die Mikrostrukturen der einzelnen Inhaltsstoffe.

Die Erfindung kombiniert deshalb Trennverfahren dergestalt, daß die Anteilsveränderungen der Milchinhaltsstoffe zu einer solchen Veränderung der Mikrostruktur der Milchinhaltsstoffe führt, daß gewünschte Eigenschaften des Endproduktes bereits im Ausgangsprodukt vorliegen oder so vorbereitet sind, daß Endlagen stabilisiert werden können.

Dies soll anhand der Herstellung von Trinkmilch, Käse, Sauermilchprodukten und Frischkäse erläutert werden.

1) Herstellung von Trinkmilch

Trinkmilch muß einem gesetzlich vorgeschriebenen Erhitzungsverfahren unterzogen werden. Dabei werden Gleichgewichtslagen verschiedener Inhaltsstoffe völlig willkürlich verändert, so daß ungewollte Eigenschaftsveränderungen daraus resultieren.

So tritt beispielsweise Kochgeschmack, Oxidationsgeschmack bei Hocherhitzung, Karamelisierung und verminderte Eiweißstabilität bei Ultrahocherhitzung und leichter Kochgeschmack sowie unbefriedigende Keimabtötung bei Kurzzeiterhitzung auf.

Die Erfindung schlägt deshalb ein Verfahren zur erzielten Beeinflussung von Mikrostrukturen der Inhaltsstoffe mit Hilfe bekannter Trennverfahren vor, wobei die jeweiligen Trennverfahren systematisch angeordnet werden, um Einzelstrukturen so zu beeinflussen, daß dann bei einem vorzunehmenden Erhitzungsprozeß keine willkürlichen Eigenschaftsveränderungen eintreten können und somit zum Beispiel negative Flavourbeeinflussungen ausbleiben.

Handelt es sich beim Ausgangsprodukt um originäre einwandfreie Rohmilch, die zum Beispiel ultrahocherhitzt werden soll, dann müssen willkürliche Strukturveränderungen des Eiweißanteils, des Milchzuckers, der Milchsalze sowie Reaktionen von Milchzucker und Eiweiß im Mikrostrukturbereich verhindert werden.

Milch wird beim erfindungsgemäßen Verfahren zunächst einem mäßigen Ultrafiltrationsverfahren unterzogen, so daß Eiweiß um einen geringen Prozentsatz aufkonzentriert wird, der Milchzucker- und Salzgehalt relativ vermindert werden. Dabei werden die vorhandenen Eiweißpartikelchen mikrostrukturell vereinheitlicht.

Die polydispersen Mikrostrukturen werden in Richtung monodisperse Formen verkleinert. Dadurch leidet die Stabilität der Wasserlösung des Eiweißes. Würden keine weiteren Maßnahmen ergriffen, würden nachfolgende Erhitzungsverfahren erheblichen Schaden am Eiweiß hervorrufen. Deshalb werden in einem nachfolgenden Trennprozeß, der nunmehr Wasser entzieht, die Eiweißpartikelchen, die einheitlich klein vorliegen, gleichmäßig vergrößert, die Oberfläche des Gesamteiweißes wird verkleinert, die nach außen wirkende Polarität wird vergrößert und damit das Wasserbindevermögen verstärkt.

Durch die vorausgehende Ultrafiltration kann eine gleichmäßige Vergrößerung aller Eiweißpartikelchen in einem nachfolgenden Eindampfprozeß erreicht werden, so daß eine annähernd monodisperse Struktur vorliegt, die sich durch eine sehr stabile Gleichgewichtslage auszeichnet.

Die durch das Trennverfahren abgetrennten Anteile (Permeat und Wasser) werden dieser so behandelten Milch teilweise oder ganz oder vermehrt wieder zugesetzt, da die vergrößerten Eiweißpartikelchen diese Flüssigkeit stürmisch anlagern, ohne daß sie ihre Strukturen verändern. Durch Temperaturvariationen beim Wiederzusatz oder getrennte Temperaturbehandlung beider Phasen kann dieser Effekt unterstützt werden.

Die Mikrostrukturen können noch weiter verbessert werden, wenn beispielsweise Elektrodialyseverfahren mitverwendet werden.

Praktisch kann wie folgt vorgegangen werden.

Es sollen 10 000 Liter ultrahocherhitzte Milch hergestellt werden. Der Gehalt an Inhaltsstoffen liegt bei ca. 2,9 % Casein, 0,6 % Protein, 4,7 % Milchzucker und 0,7 % Milchsalze. Die Gesamttrockenmasse liegt bei ca. 8,9 %.

a) Herstellung eines Vorkonzentrats

Zunächst wird ein Teil, zum Beispiel 2 000 Liter Milch, bei Temperatur unter 65 °C ultrafiltriert, bis im

| | |
|---|---:|
| Konzentrat ein Caseingehalt von ca. | 5,8 % |
| Proteingehalt | 1,2 % |
| Milchzuckergehalt | 4,7 % |
| und Salzgehalt | 0,7 % |
| | 11,3 % |

Gesamttrockenmasse erreicht ist.
Das anfallende Filtrat mit einem Gehalt an

| | |
|---|---:|
| Eiweiß von ca. | 0,2 % |
| Milchzucker ca. | 4,7 % |
| Milchsalze ca. | 0,7 % |

wird gestapelt.

b) Herstellung einer Mischung

Der verbliebene Teil der Milch, z. B. 8 000 Liter, wird mit dem hergestellten Konzentrat vermischt, so daß nunmehr etwa 9 000 Liter Mischung mit einem

| | |
|---|---:|
| Caseingehalt von ca. | 3,22 % |
| Proteingehalt von ca. | 0,64 % |
| Milchzuckergehalt von ca. | 4,68 % |
| Salzgehalt von ca. | 0,70 % |
| | 9,24 % |

Gesamttrockenmasse erreicht ist.

c) Ultrafiltration der Mischung

Diese Mischung wird nunmehr erneut unter obigen Bedingungen ultrafiltriert bis zum Beispiel im Konzentrat ein

| | |
|---|---:|
| Caseingehalt von ca. | 5,00 % |
| Proteingehalt von ca. | 1,00 % |

| | |
|---|---|
| Milchzuckergehalt von ca. | 4,65 % |
| Salzgehalt von ca. | 0,70 % |
| | 11,35 % |

Gesamttrockenmasse erreicht ist.

Das Filtrat wird wiederum gestapelt. Es liegen jetzt ca. 5 800 Liter Konzentrat und 4 200 Liter Filtrat vor.

d) Wasserentzug

Dem vorliegenden Konzentrat wird so dann bei Temperatur unter 65 °C durch Vakuumverdampfung oder Umkehrosmose oder dergleichen Wasser entzogen, bis etwa folgende Anteilsverteilung von

| | |
|---|---|
| Casein | 6,30 % |
| Protein | 1,26 % |
| Milchzucker | 5,86 % |
| Salze | 0,88 % |
| | 14,3 % |

Gesamttrockenmasse vorliegt. Es entstehen ca. 4 600 Liter Konzentrat und 1 200 Liter Trenngut.

e) Wiederholte Ultrafiltration

Für die Bedingungen einer Keimfreimachung mit Hilfe von Wärme ist es vorteilhaft, das angefallene Konzentrat von ca. 4 600 Liter einer nochmaligen Ultrafiltration zu unterziehen, so daß nunmehr 3 000 Liter Konzentrat mit

| | |
|---|---|
| Casein | 9,65 % |
| Protein | 1,94 % |
| Milchzucker | 5,85 % |
| Salze | 0,85 % |
| | 17,69 % |

Gesamttrockenmasse und 1 600 Liter Filtrat mit

| | |
|---|---|
| Eiweiß | 0,2 % |
| Zucker | 5,9 % |
| Salze | 0,9 % |
| | 7,0 % |

entsteht.

f) Erste Rückvermischung

Diese 3 000 Liter Konzentrat werden nun mit dem Trenngut, das beim Wasserentzug angefallen ist, wieder vermischt, so daß 4 200 Liter Mischung mit

| | |
|---|---|
| Casein | 6,89 % |
| Protein | 1,39 % |
| Milchzucker | 4,20 % |
| Milchsalze | 0,61 % |
| | 13,09 % |

entstehen. Diese Mischung weist eine Mikrostruktur des Eiweißes auf, die bei Hitzebehandlung keinen Kochgeschmack, keine Karamelisierung, keine Maillardreaktionen und keine Verminderung der Eiweißstabilität zuläßt.

Die Mikrostrukturen der übrigen Inhaltstoffe wurden so vorbereitet, daß sie weder in Verbindung mit Eiweiß noch als selbständige Formen während des Erhitzungsprozesses negative Auswirkungen ausüben können.

Es kommt hinzu, daß das System durch die Aufbereitung der Mikrostrukturen der Einzelsysteme bei weit niedrigeren Temperaturen als denen der Ultrahocherhitzung keimfrei gemacht werden kann.

6

g) Hitzebehandlung der verschiedenen Phasen

Erfindungsgemäß wird deshalb vorgeschlagen, die im Prozeß mindestens anfallenden zwei Phasen getrennt bei Temperatur bis 85 °C zu erhitzen.

h) Zweite Rückmischung

Die beiden Phasen werden dann heiß oder nach Abkühlung wieder vermischt, so daß dann ein haltbares Endprodukt mit originärer Zusammensetzung entsteht.

Die Mikrostrukturen werden wie folgt bei den einzelnen Verfahrensschritten beeinflußt.

a) Herstellung eines Vorkonzentrats

Durch die Vorbehandlung einer Teilmenge mit Hilfe eines Trennverfahrens (hier Ultrafiltration) wird, wie aus den Anteilsangaben des Ausgangsstoffs im Vergleich mit den Anteilsangaben des Vorkonzentrats ersichtlich, der Eiweißgehalt höher, der Milchzuckergehalt sowie der Salzgehalt bleibt weitgehend gleich.

Vom Eiweiß her gesehen heißt dies, daß der Milchzucker und Salzgehalt pro Eiweißteil geringer wird. Da das System sich bei der Ausgangslage in einem labilen Gleichgewichtszustand bezüglich der Wasserlösungsverhältnisse der Mikrostrukturen befindet, bedeutet diese Maßnahme eine Erhöhung des Wasserangebots für das Eiweiß. Mikrostrukturen von Eiweiß, die aufgrund des herrschenden Wassermangels im Ausgangsstoff, sich diesem Zustand größenmäßig angepaßt haben, können sich jetzt verändern.

Das die Eiweißstrukturen schon im Ausgangsstoff polydisperse Formen zeigen, stellt sich im Verlauf der Vorkonzentration eine Vereinheitlichung der Strukturen ein, mit nunmehr weitgehend gleichen Eigenschaften.

b) Herstellung einer Mischung

Durch Vermischung des Vorkonzentrats mit dem verbliebenen Ausgangsstoff wird das Wasserangebot für das Gesamteiweiß erhöht, so daß durch den bloßen Mischvorgang eine Vereinheitlichung der vorliegenden Eiweißstrukturen und damit eine Vereinheitlichung der Eigenschaften erfolgt.

c) Ultrafiltration der Mischung

Die gewollten Eigenschaftsveränderungen mit Hilfe der Ultrafiltration wurden durch die Vorbehandlung wesentlich erleichtert. Eiweißstrukturen können nunmehr im Mikrobereich je nach Art und Dauer der Ultrafiltration beliebig verändert werden.

Im Falle des vorliegenden Beispiels erfolgt zunächst eine Verkleinerung der Eiweißstrukturen bis alle weitgehend einheitlich klein sind, sodann erfolgt mit Hilfe des d) Wasserentzugs und mit Hilfe der e) erneuter Ultrafiltration eine einheitliche Vergrößerung und Stabilisierung der Gleichgewichtlagen.

Die unter f) angeführte erste Rückvermischung mit Hilfe von Wasser mit Destillateigenschaften bewirkt eine weitgehend freie und unabhängige Beweglichkeit der Mikrostrukturen des Eiweißes, damit ein stabiles Gleichgewicht, sowie eine gute Wärmeleitfähigkeit. Diese Phase kann deshalb ohne nachteilige Folgen einer Hitzebehandlung unterzogen werden.

Die zweite Phase (Filtrat) ist weitgehend eiweißfrei. Die Mikrostrukturen der vorliegenden Inhaltstoffe sind so beschaffen, daß diese Phase ebenfalls unbedenklich einer Hitzebehandlung ausgesetzt werden kann, da dabei weder Bräunungserscheinungen noch Maillardreaktionen auftreten können.

Nach erfolgter Rückvermischung liegt ein keimfreier haltbarer Ausgangsstoff vor, der keiner Ultrahocherhitzung unterzogen werden mußte und deshalb sowohl ernährungsphysiologisch als auch flavourmäßig einer herkömmlichen H-Milch überlegen ist.

2) Herstellung von Käse

Traditionell gefertigter Käse ist gekennzeichnet durch einen hohen Caseingehalt, niedrigen Proteingehalt, relativ niedrigen Milchzucker- und Salzgehalt.

Die traditionelle Herstellung von zum Beispiel Frischkäse geht davon aus, das Gesamtsystem einem mikrobiell bedingten Säuerungsprozeß zu unterwerfen. Milch wird bei geeigneten Temperaturen mit Mikroorganismen versetzt. Die Mikroorganismen vergären einen Teil des Milchzuckers zu Milchsäure.

Die erzeugte Milchsäure führt das vorhandene Casein vom wasserlöslichen Zustand in einen wasserunlöslichen Zustand über. Das Protein bleibt wasserlöslich.

Durch geeignete Trennverfahren wird dann ein Großteil der Wasserphase mit den darin gelösten Inhaltstoffen abgetrennt. Vornehmlich ein Milchinhaltstoff nämlich das Casein wird in relativ hoher Konzentration gewonnen.

Dieses Verfahren hat folgende Nachteile :

1. Obwohl nur ein Inhaltstoff der Milch vornehmlich behandelt und gewonnen werden soll, müssen alle anderen Milchinhaltstoffe zwangsläufig mitbehandelt werden.

2. Molkenproteine mit einer hohen biologischen Wertigkeit können nicht erfaßt werden.

3. Das Verfahren ist technisch und energetisch aufwendig, weil alle Inhaltstoffe zunächst mitberücksichtigt werden müssen.

4. Das Verfahren ist wegen des anfallenden Kuppelproduktes Molke umweltbelastend.

In Kenntnis dieser Nachteile wurden Verfahren der thermischen Vorbehandlung oder Zusatzverfahren wie in den DE-OSsen 27 28 105 oder 25 03 840 und 25 45 847 offenbart vorgeschlagen, um den Anteil der hochwertigen Molkenproteine im Frischkäse zu erhöhen.

Weiterhin wurden Verfahren vorgeschlagen, wie in der Deutschen Auslegeschrift 20 65 974 bzw. in der britischen Patentschrift 14 98 437 beschrieben, die zum Inhalt haben, den Eiweißanteil durch geeignete Trennverfahren, wie zum Beispiel Ultrafiltration oder Ultrafiltration in Verbindung mit Waschvorgängen, im süßen Bereich zu erhöhen, anschließend zu säuern und/oder enzymatisch zu behandeln, ohne daß ein Kuppelprodukt entsteht.

Des weiteren wurden Verfahren vorgeschlagen, wie in den DE-OSsen 27 46 536 und 22 11 737 beschrieben, die zum Inhalt haben entweder angesäuerte Milch oder teilangesäuerte Milch zu ultrafiltrieren bzw. während des Ultrafiltrierens Waschvorgänge mittels Wasser durchzuführen, wobei auch von voreingedickter Milch ausgegangen werden kann, bzw. ein Eindampfverfahren auch nach der Ultrafiltration durchgeführt werden kann.

Alle diese Verfahren haben zum Ziel, den Eiweißanteil in bezug zu den übrigen Milchinhaltstoffen relativ zu erhöhen, da man der Ansicht ist, daß die übrigen Inhaltstoffe qualitative Verschlechterungen des Endprodukts mit sich bringen.

Der Nachteil all dieser Verfahren liegt darin, daß lediglich anteilsmäßige Verschiebungen willkürlich ohne Rücksicht auf die Veränderung von Gleichgewichtslagen und mikrostruktureller Änderungen der Inhaltstoffe vorgenommen werden.

So kann beispielsweise willkürlich von vorkonzentrierter Milch ausgegangen werden, ohne Angabe von Konzentrationsgraden oder nach erfolgter Ultrafiltration eine Konzentration durch Wasserentzug erfolgen, ohne jeglich Rücksichtnahme auf bereits erfolgte drastische Eigenschaftsveränderungen von Inhaltstoffen.

Das führt dann dazu, daß all diese Verfahren zum Freisetzen von Bitterstoffen führen, schlechte Gallertstrukturen zur Folge haben, schlechtes Wasserbindevermögen ausweisen, und schneller sensorischer Verfall eintritt.

Es hat sich gezeigt, daß nicht die verschiedenen Anteile der Inhaltstoffe negative Auswirkungen ergeben, sondern die willkürliche Veränderung der Mikrostrukturen der Inhaltstoffe Schuld an nachteiligen Veränderungen tragen.

Die Erfindung setzt deshalb an sich bekannte Trennverfahren nicht zur anteilsmäßigen Veränderung von Inhaltstoffen ein, sondern sie benützt diese Trennverfahren zur gezielten Beeinflussung der Mikrostrukturen der Inhaltstoffe.

Es hat sich gezeigt, daß jede strukturelle Veränderung zugleich eine Eigenschaftsveränderung beinhaltet.

Werden Trennverfahren systematisch und gezielt angeordnet, so können erfindungsgemäß gezielte und gewollte Eigenschaftsveränderungen herbeigeführt werden.

Die Erfindung zeigt, daß beispielsweise der Fehler « bitter » durch Freisetzung hydrophoben Verhaltens von Inhaltstoffen hervorgerufen wird.

Wird Milch beispielsweise vor einem Ultrafiltrationsverfahren lediglich durch Wasserverdampfung willkürlich vorkonzentriert, dann tritt für alle Inhaltstoffe, die ja alle in wasserlöslicher Form vorliegen, eine Wasserverknappung ein.

Dies hat zur Folge, daß alle Inhaltstoffe ihre Strukturen ändern.

Casein zum Beispiel geht Verbindungen mit Salzen und Milchzucker ein. Starke Wasserfänger werden gebunden, Casein vergrößert seine Oberfläche, der Wasserbedarf sinkt.

Erfolgt nach diesem willkürlichen Wasserentzug und der willkürlichen Strukturänderung eine willkürliche Ultrafiltration, dann wird Wasser und darin gelöster Milchzucker und gelöste Milchsalze aus dem Medium entfernt.

Im verbleibenden Eiweißkonzentrat stellt sich ein neues willkürliches Gleichgewicht ein, indem aufgrund eines Überangebots von Wasser, Strukturen willkürlich zerfallen, und dabei hydrophobe Verhaltensweisen nach außen durchdringen, die zu hydrophoben Konglomeraten führen, die dann im Endprodukt einen stark bitteren Geschmack verursachen.

Wird während des UF-Verfahrens noch Wasser hinzugefügt mit dem Ziel, lediglich den Eiweißanteil relativ zu den anderen Inhaltstoffen zu erhöhen, verstärkt sich die negative Eigenschaftsveränderung.

Wird zuerst willkürlich ultrafiltriert und dann Wasser entzogen bis zu einer benötigten Trockenmasse im Endkonzentrat, dann zerfallen wie vorher beschrieben Eiweißstrukturen.

Die vorher im Inneren angesiedelten hydrophoben Verhaltensweisen werden freigesetzt und drängen nunmehr Wasser ab.

Ein anschließender Wasserentzug, ohne Rücksicht auf die vorliegenden Mikrostrukturen, baut nunmehr bestimmte Eiweißstrukturen zwar wieder auf, jedoch können stark hydrophobierte Strukturen nicht mehr eingekapselt werden. Diese Produkte zeigen ebenfalls stark bitteren Geschmack.

Wird Milch beispielsweise vorgesäuert oder teilweise vorgesäuert, dann wird das Löslichkeitsverhalten von Salzen verbessert.

Bereits in Verbindung mit Eiweiß stehende Salze werden aus diesem Verbund herausgenommen.

Während eines dann erfolgenden Ultrafiltrationsprozesses nimmt der Anteil von Milchsalzen im Permeat zu.

Für die Mikrostrukturen des Eiweißes bedeutet dies wiederum einen unkontrollierten Zerfall und damit Gefahr von Hydrophobierung.

Ein willkürlicher Wasserentzug vor oder nach der Ultrafiltration vergrößert eine negative Beeinflussung von Mikrostrukturen. Die Säuerungsmaßnahme dient wiederum nur der anteilmäßigen Veränderung von Inhaltstoffen.

Jedes, lediglich auf unterschiedliche Anteile von Inhaltstoffen in einem Endkonzentrat bedachtes Verfahren, führt unweigerlich zu einer unkontrollierten und unkontrollierbaren Strukturveränderung der Inhaltstoffe, damit zu völlig unkontrollierten und unkontrollierbaren Eigenschaftsveränderungen der Inhaltstoffe und läßt deswegen kein kontrollierbares Endprodukt zu.

Am Beispiel der Frischkäseherstellung und der Käseherstellung soll die Erfindung erläutert werden, wobei speziell aufgezeigt wird, daß durch gezielte Verwendung von an sich bekannten Trennverfahren Mikrostrukturen so beeinflußt werden, daß keine Bitterstoffe aufgrund des Freiwerdens von hydrophoben Verhaltensweisen entstehen können.

A) Milch oder dergleichen, versehen mit eventuell notwendigen Zusatzstoffen, wird einem Eindampfverfahren unterzogen, so daß etwa 10 % Wasser entfernt werden. Das Eindampfverfahren arbeitet in diesem Bereich äußerst energiesparend. Die Eiweißmikrostrukturen werden vergrößert. Die Salze und der Milchzucker verändern ihre Strukturen derart, daß weniger Wasser für ihre Wasserlösungsform verbraucht wird. Die jetzt vorliegenden Strukturen ermöglichen die Durchführung einer anschließenden Ultrafiltration im Optimum des Wirkungsgrades einer Ultrafiltrationsanlage, weil die Gefahr einer Verlegung der Membranen durch die geänderten Mikrostrukturen minimiert wurde.

Die Ultrafiltration ihrerseits verändert die Mikrostrukturen so, daß die Eiweißteilchen wieder kleiner, aber größengleich werden. Deshalb wird das aus der Ultrafiltrationsanlage abfließende Retentat sofort wieder einem Eindampfungsverfahren zugeführt, wobei jetzt einheitliche kleine Eiweißstrukturen gleichmäßig vergrößert werden (beim ersten Eindampfungsprozeß wurden die Eiweißstrukturen uneinheitlich vergrößert).

Das aus dem Eindampfungsprozeß ausfließende Eiweißkonzentrat wird wieder einem Ultrafiltrationsverfahren zugeführt usw., bis die einer optimalen Käsegallertstruktur entsprechende Zusammensetzung erreicht ist.

Diese Verfahrensweise hat gegenüber dem Stand der Technik einmal den erheblichen Vorteil, daß die angewendeten Trennverfahren immer in einem optimalen Wirkungsbereich bleiben und damit erhebliche Energie gespart werden kann, zum anderen der Permeatanfall im Vergleich zur herkömmlichen Technik um die Hälfte bzw. 2/3 reduziert wird und zum Dritten die Eiweißgrößenstrukturen so gestellt werden können, daß ein nachfolgender Säuerungs- oder Labprozeß eine Idealgallerte für den jeweilig herzustellenden Käsetyp entstehen läßt.

In einer besonderen Ausgestaltung des Verfahrens kann eine Überkonzentrierung vorgenommen werden, weil die Trennverfahren immer im optimalen Wirkungsbereich arbeiten, so daß der Teil der Permeates, der bei dieser Verfahrensweise anfällt, wieder zugesetzt werden kann, so daß umweltbelastende Flüssigkeit nicht mehr entsteht.

Weiterhin kann anfallendes Permeat elektrodialysiert werden, und zwar dergestalt, daß vor dem letzten Eindampfprozeß die Salze des Permeats in das Konzentrat eingeleitet werden. Dies hat den Vorteil, daß zum einen der gesamte Salzanteil im Käse verbleibt, zum anderen die Pufferkapazität des Konzentrates und die Mikrostrukturen des Eiweißes ganz bestimmten Käsetypen angepaßt werden können.

Diese Verfahrensweisen ermöglichen die Herstellung von Teil- und Vollkonzentraten für ein Endprodukt des Typs Weich-, Schnitt- oder Hartkäse. Nach dem Stande der Technik ist dies nicht möglich.

Diese Verfahrensweisen lassen sogar zu, daß der notwendige, dem jeweiligen Käsetyp entsprechende Säure- und Salzanteil schon im flüssigen Rohprodukt (Konzentrat) eingestellt werden kann.

Es liegt dann ein Konzentrat vor, in dem die Inhaltsstoffe sowohl anteilsmäßig als auch strukturmäßig dem fertigen Käse entsprechen, aber noch in wasserlöslicher Form vorliegen.

Dies so beschaffene Konzentrat wird dann in einem einzigen Verfahrensschritt von einer Flüssigkeit in einen halbfesten oder schnittfesten Zustand, z. B. mit Hilfe eines enzymatischen Vorganges, gebracht. Die bisherigen, umständlichen, zeitaufwendigen, materialintensiven, energieverbrauchenden und umweltbelastenden Verfahrensschritte entfallen damit gänzlich.

Diese erfindungsgemäßen Verfahrensweisen sind bei allen herstellbaren Milchprodukten anwendbar. Bei jedem Milchprodukt wird dabei zunächst nach den erforderlichen Mikro- bzw. Makrostrukturen und den jeweils notwendigen Gleichgewichtslagen im jeweiligen Endprodukt gefragt und diese Verhältnisse dann durch Hintereinander-, Nebeneinander- oder Parallelschaltung von Trennverfahren schon im flüssigen Ausgangsrohstoff eingestellt. Bei manchen Produkten werden abgetrennte Flüssigkeitsanteile unverändert oder verändert während des Prozesses oder am Ende des Prozesses wieder zugesetzt oder, wenn Mikrostrukturen dies erfordern, zusätzliche Mengen zudosiert.

Es besteht auch die Möglichkeit, einzelne, bei den Trennverfahren anfallende Phasen (Molkenproteine, Milchzucker, Milchsalze, Milchsäure, Wasser usw.) einer gesonderten Behandlung, wie Temperaturbehandlung, weitere Auftrennung, gesonderte Strukturbehandlung usw. zu unterziehen und sie dann einzeln zu verarbeiten oder dem Ausgangs-Rohstoff bei gleichen oder unterschiedlichen Temperaturen wieder zuzusetzen.

B) 10 000 l Milch werden mikrostrukturmäßig mit Hilfe von Trennverfahren aufbereitet. Es liegt eine Trockenmasse von 9,0 % und ein Wassergehalt von 91 % vor.

Die Eiweißstrukturen liegen polydispers in Wasser vor.

a) Erste Trennbehandlung

2 000 Liter Milch werden zunächst einem Verfahren des Wasserentzugs bei Temperatur unter 65 °C (Umkehrosmose oder Eindampfverfahren) unterzogen, bis eine Trockenmasse von 12 % und ein Wassergehalt von 88 % erreicht ist.

Durch diese Maßnahme verändern sich die Mikrostrukturen von Eiweiß, indem sie sich dem geringeren Wasserangebot anpassen.

Sie vergrößern sich. Ohne weitere Maßnahmen würden diese Strukturen bei einem Säuerungsprozeß, der zusätzlich Stoffe mit großem Wasserbedarf (Milchsäure) einbringt, hydrophobieren.

b) Erste Rückverdünnung

Deshalb erfolgt nunmehr eine Verschneidung dieses Konzentrats mit weiteren 2 000 Litern Milch. 2 000 Liter Milch mit 12 % Trockenmasse und 88 % Wassergehalt werden mit 2 000 Liter Milch mit 9 % Trockenmasse und 91 % Wassergehalt bei einer Temperatur von unter 65 °C verschnitten.

Es entsteht ein Gemisch von 4 000 Liter Milch mit 10,5 % Trockenmasse und 89 % Wasser.

Die größten vorliegenden Caseinkomplexe zerfallen in etwas kleinere Komplexe, mittlere und kleine vorhandene Caseinkomplexe werden nicht beeinflußt.

Die kleinsten Komplexe der Ausgangsmilch allerdings vergrößern sich auf mittlere Komplexe.

Insgesamt erfolgte durch das angewendete Trennverfahren und durch den Vermischungsvorgang eine Vereinheitlichung der Caseinstrukturen ohne Freisetzung von hydrophoben Eigenschaften.

Ein derartiges System ist jedoch immer noch nicht einem für die Mikrostrukturen des Eiweißes strapaziösen Säuerungsablauf gewachsen.

c) Zweite Trennbehandlung

Die vorliegende Mischung von 4 000 Liter mit 10,5 % Trockenmasse und 89 % Wasser wird nunmehr einem Ultrafiltrationsverfahren bei Temperatur unter 65 °C (besonders vorteilhaft 60 °C) unterzogen, bis ein Eiweißgehalt von über 11 % im Konzentrat erreicht ist (besonders vorteilhaft 13,56 %).

Es entstehen 1 333 Liter Konzentrat mit 13,56 % Eiweiß und einer Trockenmasse von 21 % und einem Wassergehalt von 79 % sowie 2 667 Liter Permeat mit einem Trockenmassegehalt von 7,6 % und einem Wassergehalt von 92,4 %.

Zu Beginn des UF-Verfahrens zerfallen aufgrund des Salz- und Milchzuckerentzugs die größten noch vorhandenen Caseinkomplexe zu mittleren Größen. Die kleinsten vorhandenen Caseinteilchen schließen sich zu größeren Einheiten zusammen.

Die zweite Trennbehandlung führt somit zu einer weiteren Vereinheitlichung der Eiweißstrukturen. Ein nunmehr anschließender Säuerungsvorgang würde wegen des angespannten Wasserhaushalts noch immer hydrophobisierend wirken.

d) Zweite Rückverdünnung

1 333 Liter Konzentrat werden mit den restlichen 6 000 Liter Ausgangsmilch bei Temperatur unter 65 °C (vornehmlich 60 °C) verschnitten, so daß ein Eiweißgehalt von über 5 % vornehmlich 5,25 %, ein Trockenmassegehalt von 11,2 % und ein Wassergehalt von 88,8 % entsteht.

Die angewendeten Trennverfahren sowie die Rückverdünnungen bewirken eine zunehmende Vereinheitlichung der polydispersen Eiweißstrukturen zu monodisperse Strukturen.

Die nunmehr weitgehend monodispersen Eiweißstrukturen müssen weiter verfestigt werden. Dies geschieht

e) Dritte Trennbehandlung

7 333 Liter Mischung werden deshalb einem weiteren Trennverfahren, zum Beispiel Ultrafiltration, bei 60 °C unterzogen.

## EP 0 056 658 B1

Es entstehen 3 080 Liter Konzentrat mit 12,5 % Eiweiß, einer Trockenmasse von 18 % und einem Wassergehalt von 82 %.

Dieses vorliegende Konzentrat verfügt nunmehr über gefestigte weitgehend monodisperse Eiweißstrukturen, die selbst bei einem nunmehr erfolgenden mikrobiell bedingten Säuerungsablauf oder bei Zusatz von Säure keinerlei hydrophobe Verhaltensweisen entstehen lassen.

Eine für die Aromabildung besonders vorteilhafte Maßnahme stellt eine weitere mäßige

### e) Dritte Rückverdünnung

mit Ausgangsmilch auf einen Endwassergehalt von über 82,00 %, vornehmlich 82,3 %, 3 080 Liter Konzentrat mit 82 % Wassergehalt werden mit 500 Liter Ausgangsmilch verschnitten, so daß sich ein Endwassergehalt von 82,28 % einstellt.

Dieses Endkonzentrat ist hervorragend geeignet für die Herstellung von Frischkäse.

Eine weitere Verfestigung der nunmehr vorliegenden Eiweißstrukturen kann zusätzlich durch Erhitzung des Endkonzentrats auf über 85 °C mit Heißhaltung über 2 Minuten, vornehmlich 7 Minuten, erreicht werden.

Derartige Konzentrate eignen sich aber auch für die Herstellung von Weich-, Schnitt- und Hartkäsen.

Um die notwendigen Eigenschaften der Mikrostrukturen im wäßrigen Zustand zu erreichen, erfolgt die dritte Rückverdünnung mit mindestens der Hälfte der Menge des dann vorliegenden Konzentrats.

3 080 Liter Konzentrat mit 12,5 % Eiweiß, 18 % Trockenmasse und 82 % Wasser werden mit mindestens 1 540 Liter Milch mit 3,4 % Eiweiß, 9 % Trockenmasse und 91 % Wasser verschnitten.

Es entsteht ein Gemisch von 4 620 Liter mit 9,46 % Eiweiß, 15 % Trockenmasse und 85 % Wasser.

Dieses Gemisch wird einem weiteren Trennverfahren (Ultrafiltration) unterzogen.

Es entstehen 2 300 Liter Konzentrat mit 18,9 % Eiweiß mit 24,4 % Trockenmasse und 75,6 % Wasser.

Dieses Konzentrat wird nochmals nunmehr mit der doppelten Menge Ausgangsmilch verschnitten, 2 300 Liter Konzentrat + 4 600 Liter Milch = 6 900 Liter Mischung mit 8,56 % Einweiß, 14,13 % Trockenmasse und 85,87 % Wasser. Dieses Gemisch wird wiederum nunmehr bei Temperatur von 55 °C ultrafiltriert.

Es entstehen 2 750 Liter Konzentrat mit 21,5 % Eiweiß, 26,5 % Trockenmasse und 73,5 % Wasser.

Die Mikrostrukturen der Inhaltstoffe dieses Konzentrats weisen nunmehr Eigenschaften im wasserlöslichen Zustand auf, die für eine enzymatische Behandlung sowie für Säuerungs- und Salzvorgänge bestens ohne negative Folgen geeignet sind.

Die Konzentrate können insbesondere für die Herstellung von Fettkäsen mit Sahne, oder Sahnepulver, vermischt werden.

Die Eiweißstrukturen lassen sich in ihren Eigenschaften weiterhin vorteilhaft verändern, wenn dem letzten Trennverfahren, insbesondere für die Herstellung von Schnittkäsen und Hartkäsen, ein weiterer Wasserentzug bis zu einem Wassergehalt, der 2 bis 5 % unterhalb des gesetzlich vorgeschriebenen Wassergehalts liegt, erfolgt.

Besonders vorteilhaft ist, wenn vor dem letzten Trennverfahren eine mäßige Rückverdünnung mit Milch und/oder einer Eiweißlösung und/oder einer Molkenproteinlösung erfolgt. (Darin enthalten kann auch Fett sein.)

2 750 Liter Konzentrat mit 21,5 % Eiweiß, 26,5 % Trockenmasse und 73,5 % Wasser werden mit wenigstens 500 Liter einer Eiweißlösung mit etwa 6 % Eiweiß, etwa 7 % Trockenmasse und 93 % Wasser vermischt. Es entstehen 3 250 Liter Mischung mit 19,12 % Eiweiß, 23,5 % TM, 76,5 % Wasser. Dieser Mischung wird nunmehr Wasser entzogen bis ein Wassergehalt von etwa 50 % erreicht ist.

Der Wasserentzug bei einem derartigen Konzentrat mit weitgehend monodispersen Strukturen der Inhaltstoffe (vornehmlich der Eiweißstrukturen) kann ohne Schädigung dieser Strukturen vorgenommen werden. Nachfolgende enzymatische Prozesse laufen im optimalen Wirkungsbereich ab, ohne Schädigungen, insbesondere Freisetzung hydrophober Verhaltensweisen, nach sich zu ziehen.

Diese Verfahrensabläufe können mitt weiteren Trennverfahren kombiniert werden.

Soll ein derartiges Konzentrat sofort im süßen Bereich (pH 6 bis 6,8) aromatisiert, z. B. gesalzen, werden, dann wird das anfallende Permeat einem Elektrodialyseverfahren unterzogen. Die anfallende Salzlake wird konzentriert und dem vorliegenden Konzentrat zugesetzt.

Die Mikrostrukturen, die auf diese Weise im wasserlöslichen Zustand geschaffen werden können, eignen sich zu einer besonders vorteilhaften Herstellungsweise von zum Beispiel Käse.

Das hergestellte Endkonzentrat wird mit Kulturenkonzentraten oder eßbaren Säuren auf einen für den jeweiligen Käse notwendigen pH-Wert, z. B. 4,7 pH für Weichkäse oder 5,1 pH für Schnittkäse oder 5,4 pH für Hartkäse eingestellt.

Die Eiweißstrukturen sind so vorbereitet, daß dadurch keine Gelbildung stattfindet.

Sodann wird der notwendige Salzgehalt, z. B. 2 bis 5 %, eingestellt, Mikroorganismenkulturen und/oder Enzyme zugemischt und das noch flüssige Konzentrat abgefüllt.

Die Ausdickung und Endreifung erfolgt dann in der Verpackung.

Im Endeffekt ergibt sich daraus ein vollkontinuierliches Verfahren zur Herstellung von Käse.

Je nach Ausgestaltung der erfindungsgemäßen Verfahren lassen sich durch gezielte Anwendung von Trennverfahren, die abgestellt sind auf eine bewußte Veränderung von Mikrostrukturen von Inhaltstoffen

11

in polydispersen wäßrigen Systemen, beliebige Eigenschaftsveränderungen der Inhaltstoffe schon in ihrer wasserlöslichen Form erreichen.

Damit können sowohl flüssige als auch pastöse als auch feste Nahrungsmittel umweltfreundlich, energiesparend und wirtschaftlich aus polydispersen wäßrigen Systemen hergestellt werden.

3) Herstellung von Sauermilchprodukten

Sauermilchprodukte sind gekennzeichnet durch die Art der Gallertstruktur des Eiweißes. Eiweiß wird dabei von einer Mikrostruktur in eine Makrostruktur umgewandelt. Diese Gallertstrukturen müssen so beschaffen sein, daß sie über ein starkes Wasserbindevermögen verfügen. Gallerstrukturen dieser Art verfügen dann über ein starkes Wasserbindevermögen, wenn die entstehenden Hohlräume möglichst klein sind, so daß kein Hohlraumwasser vorliegt. Eine ideale Gallertstruktur für Sauermilchprodukte liegt dann vor, wenn Wasser chemisch gebunden oder in Kapillaren vorliegt.

Die Entstehung einer derartigen Gallertstruktur kann nach den erfindungsgemäßen Verfahren schon im System Milch vorherbestimmt werden durch entsprechende Änderung der Mikrostruktur der Milchinhaltstoffe.

Milch wird zunächst einem Eindampfverfahren unterzogen. Durch diesen Wasserentzug nehmen die Milchinhaltstoffe Formen an, die diesem verminderten Wasserhaushalt entsprechen. Salze werden in Eiweißstrukturen eingebaut, Eiweißteilchen vergrößern sich, der polydisperse Zustand wird allerdings beibehalten, jedoch auf einem höheren Größenniveau.

Das Verhältnis der ionendispers vorliegenden Salze und an eiweißgebundenen Salzen verschiebt sich zu Gunsten der letztgenannten Form. Der Milchzucker verändert seine Wasserlösungsform ebenfalls.

Dieser Zustand wird der vorher beschriebenen Gallertstruktur jedoch in keiner Weise gerecht. Deshalt erfolgt nunmehr erfindungsgemäß ein weiterer Trennprozeß, z. B. eine Ultrafiltration.

Dieses Trennverfahren bewirkt jetzt eine Vereinheitlichung der Eiweißstrukturen, allerdings auf einer anderen Ebene als beim vorherigen Verfahren zur Herstellung von Trinkmilch. Insgesamt werden die Eiweißteilchen kleiner gehalten als bei Trinkmilch. Dies bewirkt eine Oberflächenvergrößerung im Vergleich zur Ausgangsmilch.

Bei einem anschließenden Säuerungsverfahren liegen somit Idealbedingungen zur Schaffung der vorher beschriebenen Gelstrukturen vor. Beim Stande der Technik war es nicht möglich, solche Idealbedingungen vorzulegen.

Die erfindungsgemäßen Einstellungen der Mikrostrukturen erlauben es sogar, daß die Trockenmaße unter den Stand der Ursprungsmilch abgesenkt werden kann, d. h., neben dem anschließenden Wiederzusatz der abgetrennten Flüssigkeitsanteile kann weitere Flüssigkeit, z. B. in Form von Molke oder Permeat und dergleichen zugesetzt werden. Eine Umweltbelastung durch Kuppelprodukte wird damit gänzlich vermieden.

In einer besonderen Ausgestaltung des Verfahrens kann das anfallende Permeat einem Ionenaustauschverfahren oder einem Elektrodialyseverfahren unterzogen werden und dieses Permeat als Puffersubstanz oder als Milchzuckerkonzentrat (auch in gespaltener Milchzuckerform) dem Ausgangsprodukt wieder zugesetzt werden.

4) Herstellung von Frischkäse

Frischkäse ist gekennzeichnet durch eine Gelstruktur, die zuläßt, daß eine Teilmenge der ursprünglich vorhandenen Flüssigkeit abgegeben werden kann, dann aber das verbleibende Wasser festgehalten wird. Nach dem Stande der Technik wird das erreicht, indem entweder Wasser ausschließlich nach erfolgter Gelbildung im notwendigen Ausmaß entfernt wird oder indem über Ultrafiltration, unter Umständen verbunden mit Waschvorgängen, das Wasser in Form von Permeat aus der Milch entfernt wird und Teil- oder Vollkonzentrate hergestellt werden.

Die erwähnten Verfahren haben aber erhebliche Nachteile. Bei keinem dieser Verfahren kann sichergestellt werden, daß die Milchinhaltstoffe die Ausbildung einer Gallerte, die den erforderlichen Ansprüchen genügt, sicherstellt.

Beim erstgenannten Verfahren ist es dem Zufall überlassen, welche Gallerstrukturen entstehen und welche Säuerungsabläufe eintreten. Zu trockener oder zu wasserlässiger Frischkäse mit entsprechend unbefriedigendem Aroma und ungenügender Haltbarkeit ist oftmals das Resultat derartiger Verfahrensweisen.

Bei Verfahren des Permeatentzugs, unter Umständen verbunden mit Waschvorgängen, erfolgt zwar eine Vereinheitlichung der Eiweißstrukturen, aber auf sehr ungünstiger Ebene. Dies hat zur Folge, daß im Fertigprodukt sandige, grießige Strukturen und Bitterstoffe entstehen.

Das erfindungsgemäße Verfahren beseitigt diese erheblichen Nachteile, indem zunächst die Ausgangsmilch beispielsweise mittels eines Eindampfverfahrens behandelt wird. Folgende Veränderungen ergeben sich :

| Ausgangsmilch | | Milchzusammensetzung nach erfolgter Wasserentzug | |
| --- | --- | --- | --- |
| Wassergehalt | 91,00 % | Wassergehalt | 88,00 % |
| Eiweißgehalt | 3,40 % | Eiweißgehalt | 4,55 % |
| Lactosegehalt | 4,70 % | Lactosegehalt | 6,27 % |
| Salzgehalt | 0,83 % | Salzgehalt | 1,18 % |
| Fettgehalt | 0,02 % | Fettgehalt | 0,03 % |

Die Größenverhältnisse der Eiweißstrukturen liegen polydispers vor. Allerdings werden die Eiweißstrukturen auf ein höheres Größenniveau angehoben.

Der Salzgehalt der Milch, der bei nachfolgenden Säuerungsabläufen wesentlichen Anteil bei Pufferungsvorgängen ausübt, wurde so gestellt, daß bei einer nun nachfolgenden Ultrafiltration diese Pufferkapazität weitgehend erhalten bleibt.

Dem Wasserentzug folgt ein Ultrafiltrationsverfahren. Die Ultrafiltration kann dabei bis zu einem Vollkonzentrat führen. Alle Zwischenstufen sind jedoch möglich. Nach erfolgter Ultrafiltration ergibt sich beispielsweise ein Vollkonzentrat mit folgender Zusammensetzung :

| | |
| --- | --- |
| Wassergehalt | 81,27 % |
| Eiweißgehalt | 11,25 % |
| Lactosegehalt | 6,27 % |
| Salzgehalt | 1,14 % |
| Fettgehalt | 0,07 % |

Die Gesamttrockenmasse nach dem zweiten Trennverfahren liegt bei dieser Verfahrensweise bei 18,73 % und entspricht der Trockenmasse eines fertigen Frischkäses.

Diese erfindungsgemäße Verfahrensweise ermöglicht die Ausbildung von Gallertstrukturen, die bei Teilkonzentraten eine kontrollierte Wasserabgabe ermöglicht und bei Vollkonzentraten exakt ablaufende Säuerungsabläufe garantiert, keine Bitterstoffe entstehen läßt und sandiges, körniges Gefüge ausschließt, weil schon im Ausgangssystem unter Beibehaltung des wasserlöslichen Zustandes die Bedingungen für das Entstehen einer optimalen Gallerte für Frischkäse gelegt worden sind.

Die Gallertstrukturen sind hinsichtlich Konsistenz und Pufferungskapazität noch exakter herstellbar, wenn das vorher abgespaltene Permeat (mittels Ultrafiltration) einem Elektrodialyseverfahren unterzogen wird. Dabei werden die im Permeat sich befindlichen Milchsalze in die Teil- oder Vollkonzentrate transferiert, so daß im Endprodukt alle ursprünglich vorhandenen Milchsalze (oder mehr als ursprünglich vorhandenen, wenn die zu dialysierende Permeatmenge erhöht wird) zugegen sind.

Dies ist nach herkömmlichen Methoden völlig unmöglich, weil bei allen herkömmlichen Verfahrensweisen die Milchsalze zu einem Großteil abgetrennt oder sogar ausgewaschen werden.

5) Beseitigung nachteiliger Eigenschaften in originären polydispersen wässrigen Systemen und Vorbereitung des Systems zur Herstellung von Sauermilchprodukten.

Originäre polydisperse wässrige Systeme werden zunehmend durch Umwelteinflüsse durch unsachgemäße Behandlung und durch Fütterungseinflüsse in ihren wasserlöslichen Gleichgewichtslagen der Inhaltsstoffe so verändert, daß eine ordentliche Produktherstellung erschwert bzw. unmöglich wird.

Alle diese nichtoriginären Bestandteile befinden sich in Wasserlösung und in Verbindung mit in Wasser gelösten originären Inhaltsstoffen.

So sind bestimmte Hemmstoffe bekannt, die bei Herstellung von mikrobiell gesäuerten Nahrungsmittel die Tätigkeit von MO stören bzw. gänzlich unterbinden. Solche wässrige polydisperse Systeme verursachen großen wirtschaftlichen Schaden.

Die Erfindung schlägt deshalb am Beispiel von Hemmstoffbelastung vor, die durch Hemmstoffbelastung veränderten Mikrostrukturen der originären Inhaltsstoffe mit Hilfe von Trennverfahren so zu beeinflussen, daß die negativen Eigenschaftsveränderungen rückgängig gemacht und benötigte Eigenschaften dabei schon vorbreitet werden.

Ein Teil einer hemmstoffbelasteten Milch wird bei Temperatur über 65 °C vornehmlich 80 °C ultrafiltriert. Ein Teil der abgetrennten Flüssigkeit vornehmlich 50 % der ablaufenden abgetrennten Flüssigkeit wird sofort dem entstehenden Konzentrat in der 2. Stude einer UF-Anlage wieder zugesetzt.

Dieser Vorgang bewirkt eine Veränderung der Mikrostrukturen von Casein und Protein und eine Freisetzung von Hemmstoffen, die mit den Ursprungsstrukturen in Verbindung standen in die wässrige Phase.

Die entstehende Mischung wird in der 2. Stufe nunmehr von einem Großteil der jetzt wasserlöslichen Hemmstoffe befreit, die über das anfallende Permeat ablaufen. Ein Teil des anfallenden Rententates wird mit wasserverdünnter Ausgangsmilch (Verdünnungsgrad mindestens 9 Teile Milch, 1 Teil Wasser), der 1. Stufe der UF-Anlage zugeführt und erneut ultrafiltriert, so daß ständig von Hemmstoffen befreite Mikrostrukturen von Milchinhaltsstoffen im abfließenden Teil des Rententates gewonnen werden und die noch nicht behandelten beschädigten Mikrostrukturen laufend regeneriert werden.

Der abfließende Teil des Rententates ist in seinen Mikrostrukturen der Inhaltsstoffe damit bereits in einen Zustand versetzt worden, der originären Zuständen entspricht.

Diese Art der Regeneration kann natürlich auch durchgeführt werden, wenn der Ausgangsrohstoff mit anderen nichtoriginären wasserlöslichen Inhaltsstoffen, z. B. aus der Umwelt belastet ist.

Der regenerierte Teil soll nunmehr zu Sauermilchprodukten verarbeitet werden.

Sauermilchprodukte sind angewiesen auf gelbildende Eigenschaften von z. B. Milchinhaltsstoffen. Dabei ist wichtig, daß keine willkürliche auf Zufällen aufgebaute Gelbildung erfolgt, sondern eine Gallerte entsteht, die wenig Hohlraumwasser aber viel Kapillar- und besonders Hydratwasser enthält.

Die gelbildende Eigenschaft von Eiweiß muß deshalb bereits bei den wasserlöslichen Mikrostrukturen vorbereitet werden. Nach dem Stande der Technik war dies bis jetzt nicht möglich.

Die Erfindung schlägt deshalb vor, z. B. die nach obigem Verfahren in ihren Mikrostrukturen korrigierte Milch zu teilen. Mindestens 20 % der zu verarbeitenden Milch wird einem Verfahren des Wasserentzugs unterworfen. Dabei werden bei Temperatur unter 65 °C speziell 65 °C 10 % des vorhandenen Wassers entzogen.

Gleichzeitig werden weitere 20 % der zu verarbeitenden Milch ultrafiltriert. Die Ultrafiltration wird solange durchgeführt, bis 80 % Retentat und 20 % Permeat entstanden ist. Sodann wird das durch Wasserentzug entstandene Produkt mit dem durch Ultrafiltration entstandenen Retentat vermischt.

Die Mischung wird erneut bei Temperatur von 55 °C ultrafiltriert. Während des Ultrafiltrierens der Mischung wird der Rest der vorbehandelten Milch mit einer Temperatur von 65 °C kontinuierlich dem Ultrafiltrationsprozeß zugeleitet, so daß das Endkonzentrat eine Trockenmasse von mind. 12 % erreicht.

Die so behandelte Milch ist von Hemmstoffen befreit und weist eine wasserlösliche Mikrostruktur der Eiweißstoffe auf, die eine optimale Gallertbildung zuläßt.

6) Aufbereitung von rekombinierten Systemen

Rekombinierte Systeme sind Systeme, die durch Wiederauflösung von z. B. getrockneten Stoffen gewonnen werden.

Verfahrensweise :

Milchpulver und/oder Eiweißpulver tierischer oder pflanzlicher Herkunft werden mit Wasser vermischt, so daß ein wässriges polydisperses System entsteht. Wenn notwendig können darin zugelassene Zusatzstoffe (z. B. Salze, Bindemittel, Enzyme, Süßungsmittel usw.) zugemischt werden. Dieses System läßt sich aufgrund der sich weitgehend zufällig einstellenden Lösungszustände sehr schlecht zu Produkten weiterverarbeiten.

Erfindungsgemäß wird deshalb dieses wässriges Zufallssystem mit Hilfe von Trennverfahren zu verarbeitungsfähigen Konzentraten mikrostrukturell aufbereitet.

1 000 l einer rekombinierten Ausgangslösung werden zunächst einer Hypoerfiltration bei Temperatur unter 20 °C vornehmlich 15 °C unterworfen, bis etwa 10 % der Trägerflüssigkeit entfernt sind.

Sodann wird die Hälfte des Konzentrats mit weiteren 1 000 l der rekombinierten Ausgangsflüssigkeit vermischt und die Mischung wird bei 55 °C ultrafiltriert, solange bis 800 l Konzentrat vorliegen.

Während des Ultrafiltrationsprozesses wird die aus der Hyperfiltration verbliebene Restmenge kontinuierlich dem Ultrafiltrationsprozess zugeleitet.

Das anfallende Konzentrat wird mit der Trägerflüssigkeit aus der Hyperfiltration wieder vermischt. Das so gewonnene Konzentrat kann dann beispielsweise zu Kondens- oder Sterilmilch weiterverarbeitet werden. In diesem speziellen Fall wird das ablaufende Permeat aus dem UF-Prozeß elektrodialysiert und die entstehende weitgehend salzfreie Flüssigkeit dem zur Kondens- oder Sterilmilch weiterzuverarbeitenden Konzentrat wieder zugemischt.

Das jetzt vorliegende Produkt eignet sich hervorragend zur Herstellung von Kondens- und Sterilmilch, ohne daß Maillard-Reaktionen oder Eiweißfällungen bzw. Nachdickungstendenzen auftreten.

**Patentansprüche**

1. Verfahren zur Vereinheitlichung der Struktur der Eiweißstoffe von Milch, dadurch gekennzeichnet, daß man

a) eine Teilmenge der Milch durch Ultrafiltration auf mindestens den eineinhalbfachen Wert der Eiweißbestandteile vorkonzentriert,

b) das erhaltene Vorkonzentrat mit der Restmenge der Milch vermischt,

c) die erhaltene Mischung durch Ultrafiltration auf mindestens den eineinhalbfachen Wert der Eiweißbestandteile konzentriert,

d) aus dem erhaltenen Konzentrat einen Teil des Wassers durch Vakuumverdampfung oder Umkehrosmose bei einer Temperatur unter 65 °C entzieht,

e) das erhaltene Konzentrat einer nochmaligen Ultrafiltration unterwirft

f) das erhaltene Konzentrat mit dem in der Stufe d) erhaltenen Wasser rückvermischt,

g) die in der Stufe f) erhaltene Mischung und das bei den Ultrafiltrationen erhaltene Filtrat einer getrennten Hitzebehandlung bei jeweils bis zu 85 °C unterwirft, und

h) die beiden Phasen der Stufe g) rückvermischt.

2. Verfahren nach Anspruch 1, dadurch gekennzeichnet, daß die Verfahrensabläufe durch Anwendung unterschiedlicher Temperaturen bei den einzelnen Trennvorgängen bzw. der Wiederzusatz von Flüssigkeit bei unterschiedlichen Temperaturen erfolgt.

3. Verfahren nach Anspruch 1 oder 2, dadurch gekennzeichnet, daß die Vermischung kontinuierlich während laufender Trennvorgänge erfolgt.

4. Verfahren nach Anspruch 1 bis 3, dadurch gekennzeichnet, daß Zusatzstoffe vor einer Trennbehandlung, während eines Mischvorganges, während eines Trennvorganges oder nach einem Trennvorgang zugesetzt werden.

## Claims

1. A process for rendering more uniform the structure of milk proteins, characterized in that

a) a partial quantity of the milk is preconcentrated by ultrafiltration to at least one and a half times the content of the protein constituents,

b) the resulting preconcentrate is mixed with the remainder of the milk,

c) the resulting mixture is concentrated by ultrafiltration to at least one and a half times the content of the protein constituents,

d) part of the water is extracted from the resulting concentrate by vacuum evaporation or reverse osmosis at a temperature below 65 °C,

e) the resulting concentrate is again subjected to ultrafiltration,

f) the resulting concentrate is back-mixed with the water obtained in stage d),

g) the mixture obtained in stage f) and the filtrate obtained by the ultrafiltrations are separately heat-treated at up to 85 °C and

h) the two phases obtained in stage g) are back-mixed.

2. A process according to claim 1, characterized in that the process sequences are performed with different temperatures being maintained during the several separating steps and with a re-addition of liquid at different temperatures.

3. A process according to claim 1 or 2, characterized in that mixing is continuously effected while separating steps are proceeding.

4. A process according to claims 1 to 3, characterized in that additives are added before a separating treatment, during a mixing operation, during a separating step or after a separating step.

## Revendications

1. Procédé d'uniformisation de structures de protéines lactiques, caractérisé en ce que

a) une quantité partielle du lait est préconcentrée par ultrafiltration à une valeur une fois et demie supérieure en composants protéiques,

b) le préconcentré obtenu est mélangé avec la quantité résiduelle de lait,

c) le mélange obtenu est concentré par ultrafifltration à au moins une fois et demie la valeur de composants protéiques,

d) on soutire au concentré obtenu une partie de l'eau par évaporation sous vide ou osmose inversée à une température inférieure à 65 °C,

e) le concentré obtenu est soumis à une autre ultrafiltration

f) le concentré obtenu est remélangé avec l'eau obtenue dans l'étape d),

g) le mélange obtenu dans l'étape f) et le filtrat obtenu lors des ultrafiltrations sont soumis à un traitement thermique séparé, à une température de 85 °C au maximum, et

h) les deux phases de l'étape g) sont mélangées.

2. Procédé selon la revendication 1, caractérisé en ce que les différentes étapes du procédé se font

15

par l'application de températures différentes lors des diverses opérations de séparation et la réadjonction de liquide à différentes températures.

3. Procédé selon les revendications 1 ou 2, caractérisé en ce que le mélange se fait continuellement pendant les opérations de séparation en cours.

4. Procédé selon les revendications 1 à 3, caractérisé en ce que les additifs sont ajoutés avant un traitement de séparation, pendant une opération de mélange, pendant une opération de séparation ou après une opération de séparation.